(19) **Europäisches Patentamt**
**European Patent Office**
**Office européen des brevets**

(11) **EP 4 273 584 A1**

(12) **EUROPEAN PATENT APPLICATION**

(43) Date of publication:
**08.11.2023 Bulletin 2023/45**

(21) Application number: **22171620.2**

(22) Date of filing: **04.05.2022**

(51) International Patent Classification (IPC):
**G01S 19/06** (2010.01) **G01S 19/07** (2010.01)
**G01S 19/43** (2010.01)

(52) Cooperative Patent Classification (CPC):
**G01S 19/073; G01S 19/06; G01S 19/072;**
**G01S 19/43**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **u-blox AG**
**8800 Thalwil (CH)**

(72) Inventors:
• **Hide, Christopher D.**
**Reigate, RH2 9QQ (GB)**
• **Bartlett, David**
**Cambourne, CB23 6DW (GB)**

(74) Representative: **Epping - Hermann - Fischer**
**Patentanwaltsgesellschaft mbH**
**Schloßschmidstraße 5**
**80639 München (DE)**

(54) **PRECISE POINT POSITIONING METHODS, DEVICES AND SYSTEMS**

(57)　The present disclosure relates to a precise point positioning, PPP, method performed by a satellite navigation device (230). In one embodiment, the method comprises: receiving multiple positioning signals from a plurality of navigation satellites (210) of a satellite-based navigation system (200) using a multi-frequency receiver (231); receiving space segment correction data for the navigation satellites (210) of the satellite-based navigation system (200); separately requesting and receiving local assistance data, wherein the local assistance data represents atmospheric errors in the vicinity of the satellite navigation device (230); and computing at least one of a precise position or time based on the received positioning signals, the space segment correction data and the local assistance data.

The present disclosure further relates to a satellite navigation device (230), method for providing assistance data to at least one satellite navigation device (230), an assistance server (280), a satellite-based positioning system (200), and a computer program.

Fig. 2

EP 4 273 584 A1

**Description**

The present disclosure relates to a precise point positioning (PPP) method performed by a satellite navigation device, a satellite navigation device, a PPP assistance method performed by at least one service provider, an assistance server, a satellite-based positioning system, and a computer program.

A number of global and regional satellite-based navigation systems are currently in use. Known examples of Global Navigation Satellite Systems (GNSS) include the US-based Global Positioning System (GPS), Russia's Global Navigation Satellite System (GLONASS), China's BeiDou Navigation Satellite System (BDS) and the Galileo system of the European Union. In addition, a number of further systems, global, regional and national, are operating or under development, including Japan's Quasi-Zenith Satellite System (QZSS) and India's Indian Regional Navigation Satellite System (IRNSS) as well as regional Satellite-Based Augmentation Systems (SBAS) .

In general, satellite-based navigation systems enable corresponding satellite navigation devices to determine their position and/or time based on signals broadcast by satellite constellations of the GNSS. Such satellite navigation devices can operate independently from any local infrastructure and provide reasonable precision for many applications, such as assisting drivers in navigation etc.

To also support applications requiring a higher degree of precision, such as autonomous driving or surveying, a number of algorithms and devices have been developed that allow a position of a satellite navigation device to be determined down to the centimetre range. Most of these approaches rely on additional information provided by reference receivers.

Many of the known approaches require the provision of local infrastructure, such as differential receivers, and/or a relatively large amount of assistance data. Moreover, satellite navigation devices employing such approaches often take a relatively long time to initialize.

Accordingly, there is a need for improved precise point positioning methods, which at least partly address the above challenges.

Brief description of the disclosure

According to a first aspect, a precise point positioning method performed by a satellite navigation device is provided. The method comprises:

- receiving multiple positioning signals from a plurality of navigation satellites of a satellite-based navigation system using a multi-frequency receiver;
- receiving space segment correction data for the navigation satellites of the satellite-based navigation system;
- separately requesting and receiving local assistance data, wherein the local assistance data represents atmospheric errors in the vicinity of the satellite navigation device; and
- computing at least one of a precise position or time based on the received positioning signals, the space segment correction data and the local assistance data.

Among others, the inventors have found that the volume and validity of different types of data used in PPP methods differ. Moreover, while some data, such as space segment correction data, is valid globally or at least over a large area, such as an entire continent, other data, such as data relating to atmospheric errors, is only of use to satellite navigation devices located within a given, smaller area, such as an area of a single country, province, or municipality, or an area defined by given reference system, such as a $100\times100$, $10\times10$ km or $1\times1$ km square of a UTM reference grid. Receiving such different types of data separately helps to reduce the amount of data received by individual satellite navigation devices. Moreover, individually requested local assistance data may be used by satellite navigation devices, such as single- and multi-frequency receivers, to estimate error components of incoming satellite navigation system signals faster, thereby allowing a position or time of the satellite navigation device to be computed with improved accuracy, as compared to a computation in the absence of this information. In particular, the provision of local assistance data greatly accelerates the start-up time of PPP methods for providing a first position based on multiple received positioning signals.

In at least one implementation, computing at least one of a precise position or time comprises computing carrier phase corrections for each one of the received positioning signals to determine phase relationships between the received positioning signals using a precise point positioning with ambiguity resolution (PPP-AR) algorithm based on the space segment correction data and the local assistance data, wherein ambiguities in the determined phase relationships are resolved using the received local assistance data. The disclosed system is particularly useful for aiding acquisition, in particular reducing the time required to obtain a first positioning, of a PPP-AR algorithm. Thereafter a PPP-AR based receiver can maintain its own estimate of the local atmospheric errors it experiences.

In at least one implementation, the method comprises the following steps performed repeatedly during the operation of the satellite navigation device: receiving current space segment correction data; receiving current positioning signals from a plurality of the navigation satellites using the multi-frequency receiver; estimating updated atmospheric errors for each one of the received positioning signals based on the current space segment correction data and previously determined atmospheric errors in absence of current local assistance data; and determining a precise position or time of the satellite navigation device based on the current position signals, the current space segment correction data and the estimated, updated atmospheric errors. This enables the satellite navigation device to maintain a precise position over longer periods of time without repeatedly receiving updates on local assistance data, thereby reducing a required downlink bandwidth. For example, the local assistance data may only be received once, in particular during an initialization or re-synchronization step of the satellite navigation device.

In at least one implementation, the local assistance data is received in response to a corresponding request comprising position data related to an approximate position of the satellite navigation device and/or satellite data related to at last one navigation satellite from which at least one of the positioning signals is received. Such a request can be used to tailor and limit the amount of local assistance data provided to the satellite navigation device, thereby further reducing a bandwidth requirement.

In at least one implementation, before the request is sent, the satellite navigation device determines an approximate position of the satellite navigation device, and the request comprises position data related to the determined approximate position. In this way, the satellite navigation device can quickly determine the area for which local assistance data is desired.

In at least one implementation, the space segment correction data is received over a broadcast channel, in particular via at least one of the navigation satellites, a geostationary communication satellite, a low earth orbit communication satellite, or a terrestrial transmitter, and the local assistance data is requested and received via a bidirectional communication network. Alternatively or in addition, the space segment correction data is received over a first transmission channel providing a data stream with an essentially fixed first bandwidth, and the local assistance data is received over a second transmission channel providing individual data messages with a variable second bandwidth. This allows to match the characteristics of the different types of assistance data to the respective channels used for their transmission. For example, space segment correction data requires a relatively low and/or constant bitrate, whereas the local assistance data is bursty and therefore should be transmitted preferably with a higher and or variable bitrate at intermittent times.

The space segment correction data may comprise satellite clock correction data, satellite orbit correction data, and/or satellite bias correction data for at least one constellation of navigation satellites.

The local assistance data may comprise ionospheric error data and/or tropospheric error data for at least one position within the vicinity of the satellite navigation device.

According to a second aspect, a satellite navigation device is provided. The satellite navigation device comprises:

- a multi-frequency receiver configured to receive multiple positioning signals from a plurality of navigation satellites of a satellite-based navigation system;
- a first interface configured to obtain space segment correction data for the navigation satellites of the satellite-based navigation system;
- a second interface configured to request and obtain local assistance data wherein the local assistance data represents atmospheric errors in the vicinity of the satellite navigation device; and
- a processing unit configured to execute a precise point positioning, PPP, algorithm to compute at least one of a precise position or time, wherein
- the PPP algorithm resolves carrier phase ambiguities between signals received by the multi-frequency receiver using the received positioning signals, the obtained space segment correction data and an estimate of atmospheric errors; and
- the local assistance data is used to speed up an initial determination of the atmospheric errors affecting the navigation signals received by the multi-frequency receiver.

The satellite navigation device according to the second aspect can quickly resolve errors introduced by local atmospheric disturbances based on received local assistance data and therefore exhibits an improved start-up performance compared to PPP-AR receivers either resolving ambiguities without the provision of atmospheric error data or waiting a long time for a broadcast of global assistance data including atmospheric assistance data.

In at least one implementation, the device further comprises a transceiver configured to perform bidirectional communication with a communication network. The first interface is configured to receive a data stream comprising the space segment correction data from a broadcast channel, in particular a satellite broadcast channel received using the multi-frequency receiver. The second interface is configured to send a request to and receive a corresponding response from a service provider via the communication network using the transceiver. This allows the receiver to receive the different types of assistance data using different communication channels suited to the characteristics of the respective data types.

According to a third aspect, a method for providing assistance data to at least one satellite navigation device is provided, which is performed by at least one service provider. The method comprises:

- determining space segment correction data for navigation satellites of a satellite-based positioning system, the space segment correction data comprising satellite clock correction data, satellite orbit correction data, and/or satellite bias correction data for at least one constellation of navigation satellites;
- broadcasting the space segment correction data to a plurality of satellite navigation devices;
- wait for requests for assistance data, each received request being related to an approximate position of a corresponding satellite navigation device;
- determining first local assistance data, the first local assistance data comprising ionospheric and/or tropospheric correction data for a first area; and
- transmitting the first local assistance data to a first satellite navigation device in response to a first request received from the first satellite navigation device, the first request being related to an approximate position within the first area.

Such a method enables provision of local assistance data to a plurality of satellite navigation device, such as the satellite navigation device according to the second aspect, for performing PPP positioning, for example using the method according to the first aspect.

In at least one implementation, the space segment correction data is broadcast by the at least one service provider repeatedly to the plurality of satellite navigation devices via at least one of the navigation satellites, a geostationary communication satellite, a low earth orbit communication satellite, or a terrestrial transmitter. Alternatively or in addition, the local assistance data is transmitted by the at least one service provider in response to the first request via a bidirectional communication network.

According to a fourth aspect, an assistance server is provided. The assistance server comprises:

- a communication interface, configured to wait for requests for assistance data from at least one satellite navigation device, each request being related to an approximate position of the at least one satellite navigation device; and
- a processing unit configured to determine local assistance data for resolving ambiguities in determined carrier phase relationships by a precise point positioning, PPP, algorithm of at least satellite navigation device located within a first area, the local assistance data comprising ionospheric and/or tropospheric correction data for a first area, wherein the communication interface is further configured to transmit the local assistance data in response to a first request received from a first satellite navigation device, the first request being related to an approximate position within the first area.

The server according to the first aspect enables is suitable for performing the method according to the third aspect.

According to a fifth aspect, a satellite-based positioning system is provided. The system comprises:

- at least one satellite navigation device according to the second aspect;
- an assistance server according to the fourth aspect, wherein the assistance server is configured to transmit the local assistance data to the at least one satellite navigation device via a bidirectional communication network in response to receiving a corresponding request from the at least one satellite navigation device; and
- a space segment correction provider, wherein the space segment correction provider is configured to broadcast the space segment correction data to the at least one satellite navigation device via a broadcast channel, in particular via at least one of the navigation satellites, a geostationary communication satellite, a low earth orbit communication satellite, or a terrestrial transmitter.

According to a sixth aspect, a computer program is provided. The computer program comprises instructions which, when the program is executed by at least one processor of a satellite navigation device or at least one server of at least one service provider, cause the satellite navigation device to carry out the method according to the first aspect, or cause the at least one server to carry out the method according to the third aspect, respectively.

The system according to the fifth aspect and the computer program according to the sixth aspect enable similar advantages as the methods and devices according to the first to fourth aspect.

Brief description of the drawings

Specific embodiments of the present disclosure will be described with reference to the attached figures. For easier reference, the same reference numerals may be used to refer to the same or similar components of different embodiments.

This does not imply, however, that these components are identical in every respect.

Figure 1 shows a general architecture of a satellite-based navigation system.

Figure 2 shows a first architecture for a satellite-based navigation system for assisting precise point positioning.

Figures 3 and 4 shows processing components and steps performed by a satellite navigation device.

Figures 5 to 9 show further satellite-based positioning systems having varying architectures.

Detailed description of embodiments

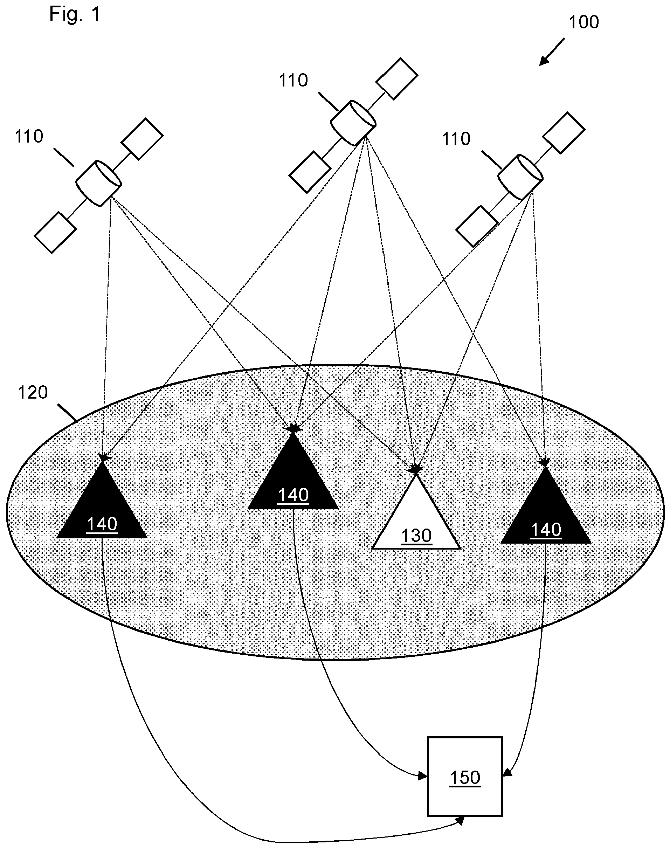

Before specific details of the disclosed PPP methods, devices and systems are described, first a general architecture of a satellite-based navigation system (SNS) 100 is described with reference to Figure 1. While the term satellite-based navigation system is used throughout the description for better understanding, the disclosed approach may also be applicable to non-navigation applications, in particular precise positioning, surveying, surveillance, and timing applications, including time-synchronization services.

According to Figure 1, the SNS 100 comprises a number of navigation satellites 110. The navigation satellites 110 orbit earth and transmit various SNS messages, e.g. navigation data messages, by means of broadcast to a plurality of receivers. In the example depicted in Figure 1, a total of three navigation satellites 110 are visible from within a given area 120. Corresponding SNS messages transmitted by the satellites 110 are received by a satellite navigation device 130, which may be a mobile receiver, also referred to as "rover" in the context of SNS or GNSS, as well as a network of three reference receiver stations 140. Attention is drawn to the fact that the exemplary system depicted in Figure 1 is simplified for representational reasons, and that typical SNS will comprise a larger number of satellites 110, satellite navigation devices 130 and reference receiver stations 140.

State Space Representation (SSR) provides corrections to satellite navigation devices for high accuracy positioning at the centimetre level by decomposing observed errors into different component parts rather than as a single accumulated or lumped error as is done for some conventional real time kinetics (RTK) satellite navigation devices, in particular singe-channel or single frequency satellite navigation devices. SSR is a proven technique used in some advanced correction services such as Secure Position Augmentation for Real Time Navigation (SPARTN) and the Quasi-Zenith Satellite System (QZSS) "Centimetre Level Augmentation Service" (CLAS).

SSR corrections usually comprise the following components:

- Satellite orbit errors;
- Satellite clock errors;
- Satellite code and phase biases;
- Ionospheric errors; and
- Tropospheric errors.

The reference receiver stations 140 are installed at accurately known positions across the geographic area of interest and can collect SNS measurements, i.e. observations on the locally received positioning signals received from visible navigation satellites. Since the positions are accurately known, the observed SNS errors in the received positioning signals at each location can be determined by known SSR modelling algorithms.

Currently, these SNS measurements are sent to a processing centre 150 which combines observations from the network of reference receiver stations 140 across the area 120 in order to decompose them into the individual error components as described above. The individual error components are combined into a single data stream. The bandwidth available for transmission of this data stream limits the amount of data that can be provided. This results in a trade-off between performance, data rate, update interval, geographic coverage and which constellations and bands will be supported.

For example, QZSS CLAS only covers the Japanese region and has been optimised for a maximum data rate of approximately 1.6 kb/s with a maximum update interval of 30s to ensure that acquisition in under 60s occurs most of the time. It contains atmospheric correction data for signals received from up to 11 satellites in geostationary or geosynchronous orbits. QZSS CLAS therefore requires a relatively high transmission bandwidth and only covers a limited geographic area. Galileo High Accuracy Service (HAS) Service Level 1 provides corrections for GPS and Galileo satellites at a data rate of around 450 b/s, but does not provide data related to atmospheric disturbances.

In other words, services today consider the corrections to be a single indivisible data stream containing different components.

According to the present disclosure, the observed errors are decomposed into their component parts prior to their transmission. Decomposing the observed errors into their component parts provides several advantages over conventional lumped RTK corrections. For example:

- Different errors change at different rates, so lower update rates can be used for those which change more slowly.
- Component corrections can be modelled using state space models that apply over large geographic areas thereby allowing them to be broadcast across large geographical areas (even continents) thereby making them appropriate for satellite distribution.
- The total bandwidth required for distributing corrections can be significantly reduced.

Moreover, according to the present disclosure, the component errors described above can be classified into two categories:

1. Space segment errors associated with a particular satellite and signal: orbits, clocks and biases; and
2. Atmospheric errors introduced by signal propagation through the ionosphere and troposphere.

The first class of errors, space segment, are global and can be attached to specific signals and satellites. They are globally applicable to a positioning solution irrespective of where an SNS receiver is located. Clock errors are short term and therefore clock corrections need to be supplied fairly frequently (typically every 5 to 10 seconds). Orbits and biases change more slowly and can be updated less frequently. Space segment errors for an entire constellation can be provided using a broadcast data stream of as little as a couple of hundred bits per second.

The second class of errors depend on where the SNS receiver is located and the position of the satellite transmitting the signal since both factors affect the propagation path through the ionosphere and troposphere. The ionospheric and tropospheric error models tend to change slowly so they can usually be updated at lower rates. However, the geographic nature of the corrections means that the models are complex and each update requires a relatively large amount of data (compared with the space segment corrections).

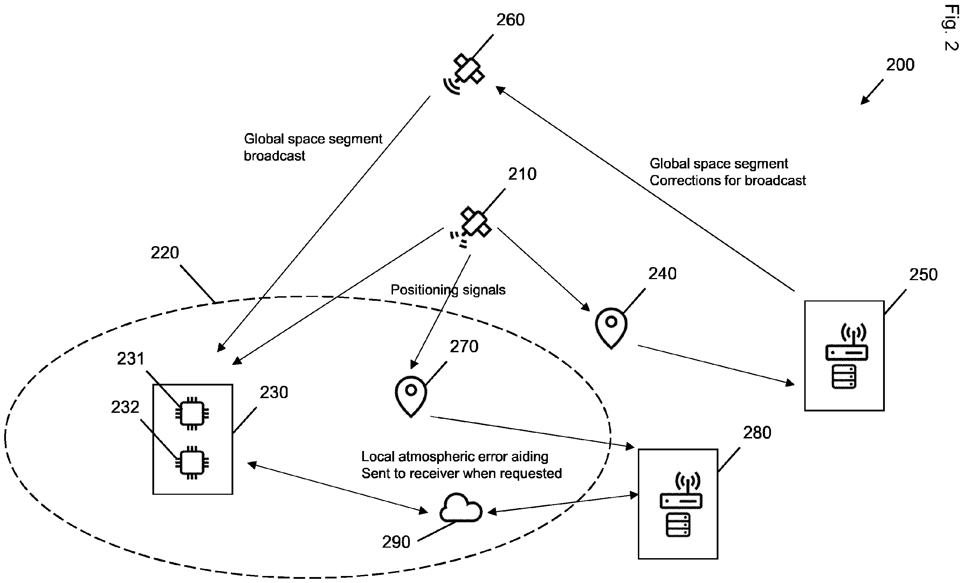

Figure 2 shows a first architecture for a satellite-based positioning system 200 for assisted precise point positioning. As before, the system 200 comprises a satellite navigation device 230 that is configured to receive multiple positioning signals from one or more navigation satellites 210. According to the present disclosure, in order to enable the satellite navigation device 230 to perform precise point positioning, the satellite navigation device 230 at least partially relies on State Space Representation (SSR).

In the system 200 of Figure 2, the satellite navigation device 230 may receive a plurality of positioning signals on different carrier frequencies using a multi-frequency receiver 231.

In particular, the satellite navigation device 230 may receive multiple signals from multiple satellite constellations. For example, a multi-frequency receiver 231 with two, three or even more RF front-ends (not shown in Figure 2) may be used to receive positioning signals that are spaced apart in the frequency domain. Subsequently, digital signal processing may be used to separate out the different signal measurements. Each RF front-ends may be software configurable. However, they may also comprise components, such as filters, antennas, etc., that are specific for a given frequency band.

In the disclosed implementation, signals from the so called L1 (centred at 1575.42 MHz, approximately 1565-1586 MHz), L2 (centred at 1227.60 MHz, approximately 1217-1238 MHz) and L5 (centred at 1176.45 MHz, approximately 1164-1189 MHz) bands are received by different RF front-ends. Each of these bands is covered by an RF front-end of its own. The individual L1, L2 and L5 positioning signals received by the RF front-ends are separated out in the digital signal processing domains.

Alternatively, a plurality of positioning signals on different carrier frequencies may be received sequentially using a multiplexing, single-frequency receiver (not shown). However, at least for high accuracy solutions it may be preferable to continuously track all signals of interest.

As satellite navigation signals propagate through parts of the atmosphere, they are subject to various errors. While in principle such errors result in a reduced accuracy of the positioning algorithm, knowledge about a frequency dependency of introduced errors may also be used to improve precision of an estimate of the corresponding error. For example, an ionospheric delay can be estimated and removed by exploiting the principle that propagation through an ionizing medium leads to a known, frequency-dependent propagation delay.

As detailed above, other errors encountered by the satellite navigation systems comprise so-called space segment errors, which are independent of atmospheric disturbances. For example, the exact position and time of each navigation satellite 210 may differ from an assumed exact position, due to deviations in the exact trajectory and clock jitter of the navigation satellite 210.

In order to compute these and other error components, a network of reference stations 240 is provided across the geographic area being covered by the satellite-based positioning system 200. For simplicity, Figure 2 shows only a first reference receiver 240 of a network of reference stations. The first reference receiver 240 also receive the navigation satellite signals broadcast by the navigation satellite 210. It may forward the received positioning signals directly, or first compute error components comprising space segment error components and provide them to a first server 250 configured for computation of global space segment PPP corrections. The precise location of the first reference receiver 240 may be known by the first server 250 in advance, or it may be communicated together with the received positioning signals or error components. Although not shown in Figure 2, the server 250 will typically receive corresponding data from multiple reference receivers 240 and may therefore compute very precise space segment corrections for one or more satellite constellations.

The resulting data stream may be distributed to satellite navigation devices 230 using one or more channels which may include:

- Satellite distribution within the navigation satellite network domain such as using a data bearer on bands L6 or E6;

- Satellite distribution using a separate communications networks such as Inmarsat;

- Terrestrial broadcasting using radio broadcast stations;

- Internet distribution over wireless networks; or

- the LTE Positioning Protocol (LPP) in 3GPP LTE and 5G networks.

In the disclosed system 200, the space segment correction data is broadcast, using a global PPP correction broadcast satellite 260, to some or all satellite navigation devices 230 of the system 200. In the system 200 shown in Figure 2, the space segment correction data may be received by the multi-frequency receiver 231 of the satellite navigation device 230. However, in another system, a separate receiver circuit of the satellite navigation device 230 may be used to receive the space segment correction data broadcast by the broadcast satellite 260.

Based on the knowledge of the space segment correction data as well as observance of multiple positioning signals received at different frequencies and knowledge about the frequency-dependent errors introduced by the atmosphere, the satellite navigation device 230 can, in principle, compute its own position with a high degree of accuracy. For example, the satellite navigation device 230 may compute its own position in the metre, sub-metre, or centimetre range. Specifically, using a dual-band, tri-band or quad-band receiver, the satellite navigation device 230 can, over time, resolve carrier-phase ambiguities introduced by the ionosphere.

However, traditionally PPP solutions suffer from slow convergence, typically taking longer than 15 minutes to resolve ambiguities in ionospheric errors and achieve carrier phase tracking for high accuracy positioning under non-optimal signal conditions and/or using a dual-band receiver.

In general, the algorithms used for PPP are relatively complex and initially comprise a large number of unknown variables. Especially during an initial or resynchronization phase of the receiver, the satellite navigation device 230 may have incomplete knowledge about a phase angle of the satellite positioning signals received from the navigation satellites 210. In mathematical terms, a corresponding set of equations will result in a number of ambiguities with respect to determined phase relationships between the various positioning signals. As detailed above, such ambiguities can be resolved, in principle, by observing positional signals over longer periods of time.

In various applications, such as autonomous driving, it is desirable to obtain a precise position of the satellite navigation device 230 as soon as possible, for example within a few or tens of seconds after starting the device 230.

To facilitate an improved start-up behaviour of the satellite navigation device 230, the satellite-based positioning system 200 of Figure 2 further comprises a second reference receiver 270 that also receives the positioning signals from the navigation satellites 210. Although only one second reference receiver 270 is shown in Figure 1, in practice multiple reference receivers 270 will be provided, which are located in different parts of the area served by the navigation satellites 210. The second reference receiver 270 will track the signals of one or more satellite constellations over a longer period of time and therefore allows to determine atmospheric error components introduced by the propagation of the positioning signals from the navigation satellites 210 through a part of the atmosphere in a direct line of sight between the respective navigation satellite 210 and the second reference receiver 270.

As detailed above with regard to the first reference receivers 240 and the first server 250 for computing the space segment correction data, corresponding corrections may be computed either by the second reference receiver 270 itself or a corresponding second server 280. Accordingly, the second server 280 can provide assistance data that is local to an area 220 surrounding the second reference receiver 270. Moreover, by receiving atmospheric errors for a plurality of second reference receivers 270, the second server 280 may establish atmospheric errors for different parts of the area served by the satellite navigation system 200.

During initialization of the satellite navigation device 230, a data connection between the device 230 and the second server 280 may be established via a further communication network 290. For example, the satellite navigation device 230 may comprise a communication device 232 configured to send a request for local assistance data over a terrestrial data network, such as a digital, wireless communication network. The request will be forwarded to the second server 280 and may comprise an approximate position of the satellite navigation device 230. For example, a position with a relatively low precision of tens to hundreds of metres may be provided. Such an approximate position may be determined by the satellite navigation device 230 even in the absence of space segment and/or atmospheric correction data based on a limited number of received positioning signals. Alternatively, an approximate position may also be manually provided or stored in the satellite navigation device 230, for example a position at which the satellite navigation device 230 was last used.

Based on the approximate position contained in the request, the second server 280 may retrieve pre-computed or compute on demand local assistance data for aiding the satellite navigation device 230. In particular, in case the second server 280 maintains a global model of atmospheric disturbances experienced in different subareas of a service area, the second server 280 may select a subarea corresponding to the approximate position contained in the request. In the depicted example, the satellite navigation device 230 requests local assistance data for the area 220, in which the second reference receivers 270 is located.

In response to the above request, the second server 280 will send a response message back via the communication network 290 to the satellite navigation device 230. The response message may contain local assistance data representing atmospheric errors for the area 220 in which the satellite navigation device 230 is located.

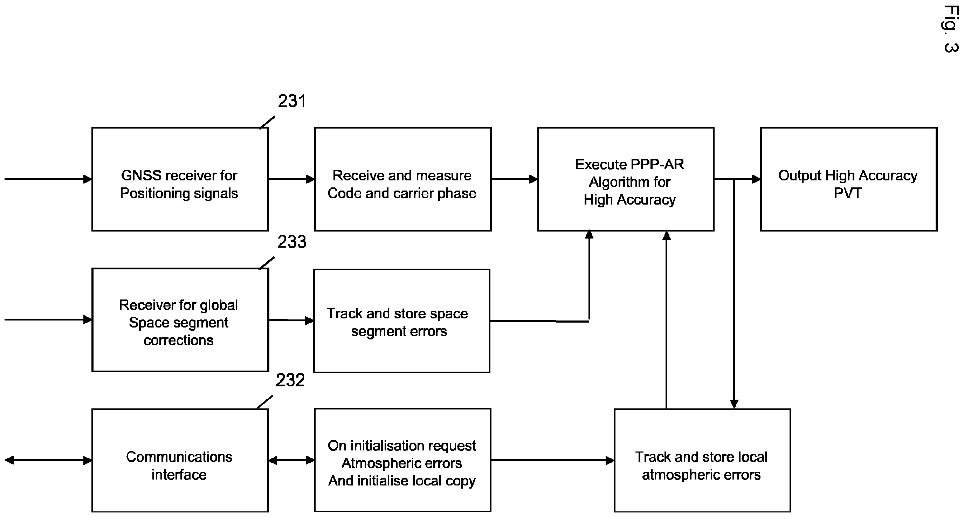

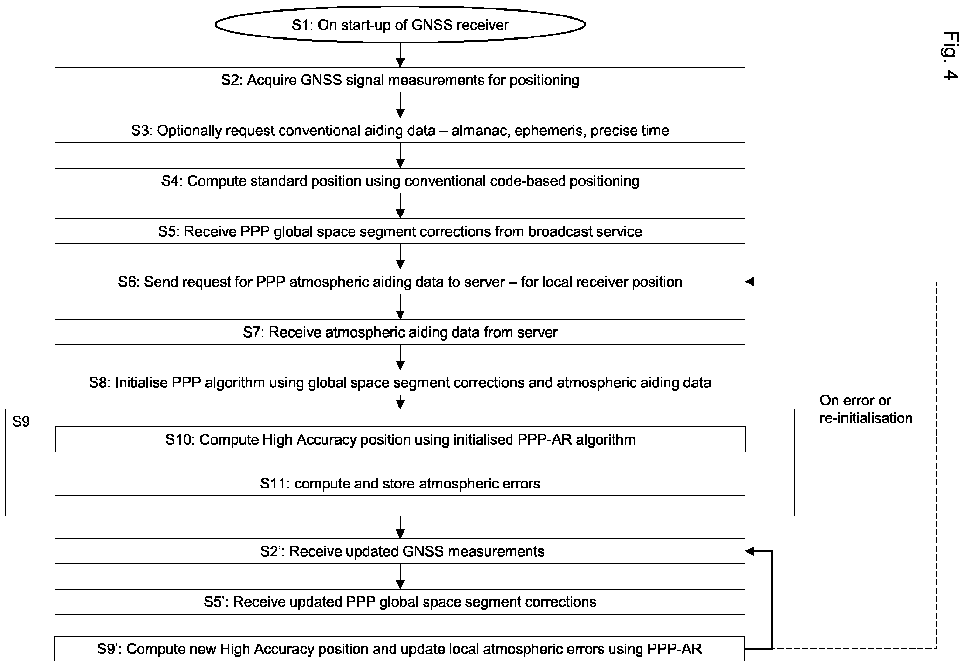

Figures 3 and 4 show in greater detail how the satellite navigation device 230 processes the data received via different communication channels. The steps shown therein may be performed by a generic CPU and associated memory, or circuits specifically configured for signal processing.

The method steps described below will typically be performed on or immediately after start-up of the satellite navigation device 230 in a step S1, for example during an initialisation phase of the satellite navigation device 230. In addition, the below method steps may also be performed at other well-defined points during operation of the satellite navigation device 230, in particular at times, when the satellite navigation device 230 does not have valid estimates of atmospheric errors.

In a step S2, the satellite navigation device 230 acquires multiple satellite signal measurements for positioning. For example the multi-frequency receiver 231 repeatedly receives and measures code and carrier phases of positioning signals, also referred to as SNS signals in the following. Step S2 is typically performed continuously or periodically as long as the satellite navigation device 230 is operational.

In a step S3, the satellite navigation device 230 may optionally request conventional aiding data. Such data may include, for example, an almanac for the SNS 200, ephemeris data for the navigation satellites 210, or a precise time. Such data may be received directly from the navigation satellites 210 or from another source, such as an assistance server providing corresponding data over the communication network 290, or a combination thereof.

In a step S4, the satellite navigation device 230 computes a standard position using conventional code-based positioning. At this stage, the satellite navigation device 230 has not yet determined a model of all errors affected the received SNS signals. Accordingly, the position obtained using conventional code-based positioning is associated with a relative large positional uncertainty, and is therefore referred to as approximate position in the following. The approximate position may have a precision of, for example, several tens or hundreds of metres.

In a step S5, the satellite navigation device 230 receives and at least temporarily stores PPP global space segment corrections from a broadcast service. For example, a separate receiver 233 may receive a data stream comprising regular updates on space segment errors. Accordingly, step S5 may be executed at regular intervals, for example whenever new space segment correction data is broadcast.

Attention is drawn to the fact that steps S2 to S5 may be performed in an arbitrary order and partly or completely in parallel with one another as shown, for example, in the upper part of Figure 3.

In a step S6, the satellite navigation device 230 sends a request for local assistance data in the form of atmospheric aiding or assistance data for PPP to an external server. The requests is specific for the approximate position of the satellite navigation device 230. Specifically, the satellite navigation device 230 may issue a request for local assistance data via the communication interface 232 to the second server 280 and wait for a corresponding response from a service provider. The request may comprise the approximate position computed in step S4, or data corresponding to an area surrounding the approximate position, i.e. a predefined grid segment from a reference grid. The request may also indicate information on visible satellites. For example, the request may comprise an identifier of each satellite from which positioning signals were received in step S1 and/or which should be visible at the approximate position according to the almanac or ephemeris data received in step S3.

Unlike steps S2 and S5, steps S6 is typically only performed once or at a well-defined point of operation. For example, step S6 is only executed when the second server 280 is connected to the communication network 290 during initialization or when the satellite navigation device 230 does not have valid estimates of atmospheric errors.

In response, in a step S7, the satellite navigation device 230 receives the local atmospheric aiding or assistance data from an assistance server, for example the second server 280. The local assistance data provided by the service provider may comprise ionospheric and/or tropospheric correction data for an approximate position or area 220 indicated in the request. For example, the service provider may return a local model of the atmosphere or may provide individual correction data for one or multiple positions within a given area in relatively close proximity to the approximate position of the satellite navigation device 230. In one implementation, the provided local assistance data may simply comprise ionospheric and tropospheric correction data for the approximate position itself.

In specific implementations, local assistance data returned to the satellite navigation device 230 in response to a corresponding request can take several different forms, including atmospheric corrections similar to those in current SSR correction services and atmospheric error estimates specific to the requesting satellite navigation device 230.

Example 1: Local assistance data from an SSR service

In this example, the responding server 280 sends to the satellite navigation device 230 the current Ionospheric and Tropospheric error models in a format compatible with current SSR correction services. This typically includes three or four messages:

- Ionosphere slant delay correction as a polynomial model per satellite;
- Tropospheric vertical errors for a region that may include a polynomial model;
- Grid corrections for troposphere vertical residual errors (typically specified as hydrostatic and wet delays) and ionosphere residual errors; and/or
- Information specifying the selected grid point locations and optionally the troposphere mapping model to use.

The ionosphere slant delay correction is a polynomial model representing the ionospheric errors over the region covering the satellite navigation device's 230 position and surrounding grid points. This could be a simple linear model or a higher order polynomial as supported in current SSR correction services. The satellite navigation device 230 uses knowledge of its approximate position and the ionospheric slant delay correction model to compute the base ionospheric errors (expected to be observed by it) for each satellite.

The grid corrections provide fine grained error estimates based on its approximate geographic position. These parameters being specified at typically three grid points enclosing the satellite navigation device's approximate position. Using the known grid point locations the satellite navigation device 230 interpolates the ionospheric residual errors for its known position and applies these as a correction to the ionospheric errors obtained using the slant delay correction model. The troposphere errors are estimated by interpolating the vertical delays at the surrounding grid points to the satellite navigation device's 230 known position. The vertical delays are then corrected by applying an appropriate mapping function which takes into account global troposphere variations and satellite position to arrive at a good estimate of the error caused by propagation of the signal through the troposphere.

Among others, this approach has the advantage of requiring minimum complexity at the server which would only need to select the appropriate correction messages and fields from an existing SSR service and send this subset of the correction data to the satellite navigation device 230. However it requires more data to be communicated and the satellite navigation device 230 needs to know how to interpret the correction messages which may differ depending on which SSR correction service was used in the assistance data provision.

Example 2: Local assistance data specific to the satellite navigation device 230

In an alternative mode of assistance, the server 280 computes the corrections as described above in the previous subsection since it knows the satellite navigation device's 230 position. It may compute the error estimates using the same algorithms as described above or more precise estimates based on a wider range of local knowledge (for example local weather conditions prevailing at and around the satellite navigation device 230) and more sophisticated models. Only the final error estimate, which is the expected observed error, is sent to the satellite navigation device 230 thereby minimising the amount of data that needs to be computed and the complexity of models required at the satellite navigation device 230. This will typically take the form of a persatellite observed error for the receiver's specific geographic location.

Among others, this approach reduces the amount of data to be signalled, reduces complexity of the satellite navigation device 230 and decouples it from the algorithmic and messaging particularities of the correction services used by the assistance server 280. This also represent a more general solution.

In a step S8, the satellite navigation device 230 initialises a precise point positioning with ambiguity resolution (PPP-AR) algorithm using the global space segment corrections received in step S5 and the atmospheric aiding data received in step S7. That is to say, during an initialization phase of the satellite navigation device 230, rather than computing the local atmospheric errors based on the received positioning signals alone, atmospheric errors may simply be provided by an external assistance provider, such as the second server 280 via the communication network 290 as explained above with respect to Example 2. Alternatively, they may be computed by the satellite navigation device 230 based on an atmospheric error model as explained above with respect to Example 1.

In a step S9, the satellite navigation device 230 computes a high accuracy position using a previously initialised PPP algorithm. In particular, based on the information received in steps S2, S5 und S7, in step S9, the computer-implemented PPP-AR algorithm initialised in step S8 may be executed on a processor of the satellite navigation device 230. The PPP-AR algorithm provides two kinds of outputs.

Firstly, in a step S10 it outputs a position or time of the satellite navigation device 230 with a relatively high precision, such as a precision in the metre or sub-metre range. At the same time, due to the analysis of phase errors observed in the step S2, it provides updated estimates of local errors introduced by the atmosphere.

Below, the relevant parts of a mathematical model implemented by a typical PPP-AR algorithm of the satellite navigation device 230 are described. However, attention is drawn to the fact that known PPP-AR algorithms differ in several aspects and that the method indicated above can be adapted to different implementation of PPP-AR.

The basic observation equations can be written as:

$$P_{r,i}^{s} = \rho_r^s + c(dt_r - dt^s) + T_r^s + I_{r,i}^s + b_{r,i} - b_i^s + e_{r,i}^s \qquad (1)$$

$$L_{r,i}^{s} = \rho_r^s + c(dt_r - dt^s) + T_r^s - I_{r,i}^s + \lambda_i(N_{r,i}^s + B_{r,i} - B_i^s) + \varepsilon_{r,i}^s \qquad (2)$$

Therein, $P_{r,i}^s$ and $L_{r,i}^s$ are code and phase observations made by a satellite navigation receiver r to navigation satellites s on frequency $f_i$. $\rho_r^s$ is the geometric distance between the satellite navigation receiver r and the navigation satellite s. c is the speed of light $dt_r$ is the satellite navigation receiver clock offset error, and $dt^s$ the navigation satellite clock offset error. $T_r^s$ is the tropospheric slant delay between the navigation satellite and the satellite navigation receiver. $I_{r,i}^s$ is the Ionospheric slant delay between the navigation satellite and the satellite navigation receiver for frequency $f_i$. $b_{r,i}$ and $b_i^s$ are the frequency dependent hardware delays for code observations for the satellite navigation receiver and the navigation satellite, respectively. $B_{r,i}$ and $B_i^s$ are the frequency dependent hardware delays for carrier phase observations for the satellite navigation receiver and the navigation satellite, respectively. $\lambda_i$ is the wavelength of the phase observations. $N_{r,i}^s$ is the integer ambiguity of the phase observations, $e_{r,i}^s$ and $\varepsilon_{r,i}^s$ are error terms for unaccounted code and phase measurement noise.

First, ionospheric-free equations are formed. The ionosphere is an ionising medium which means that the delay term is dependent on the frequency. The delay differential between two frequencies f1 and f2 is proportional to:

$$\frac{f_2^2 - f_1^2}{f_1^2 f_2^2} \qquad (3)$$

Using this relationship, the ionosphere-free equations are formed. This eliminates the first order ionospheric effects. Space segment corrections are obtained from the broadcast service received in step S5 and applied to the space segment errors as correction of first order errors. Following convention, the navigation satellite hardware delay is assimilated into the navigation satellite clock error, and the satellite navigation receiver hardware delay is assimilated into the satellite navigation receiver clock error.

In order to achieve an ambiguity resolved solution the satellite navigation receiver needs to resolve the "widelane" and "narrowlane" ambiguities and the "widelane" and "narrowlane" Fractional Cycle Biases. By providing initial estimates of the ionospheric and tropospheric delays, the search space for resolving at least some of these unknowns is reduced and the time to achieve an AR fix is therefore reduced. Once resolved the satellite navigation receiver can continue tracking the atmospheric error terms.

The general process for resolving the integer ambiguities and Fractional Cycle Biases is as follows. Firstly, the "widelane" float ambiguities are derived using the Hatch-Melbourne-Wübbena geometry-free and ionosphere-free combination of code and phase measurements. The Fractional Cycle Biases are estimated relative to a chosen reference navigation satellite, and, using a rounding strategy, the "widelane" ambiguities can be fixed. Secondly, the dual frequency ionosphere-free combination can be decomposed into integer fixed "widelane" ambiguities and float "narrowlane" ambiguities.

Using the same strategy as for "widelane", the "narrowlane" integer ambiguities and Fractional Cycle Biases can be estimated. Due to correlation between different PPP ambiguities, the LAMBDA (least squares ambiguity decorrelation adjustment) method is used for a real-time solution. A few different search and resolution strategies are in use and details of the implementation will be familiar to those experienced in the art. Further details on LAMBDA can be found, for example, in Teunissen, P.J.G., "The least-squares ambiguity decorrelation adjustment: a method for fast GPS integer ambiguity estimation", 1995, Journal of Geodesy, Vol.70, pp.65-82., whose content is included by reference in this application.

As indicated by steps S2', S5' and S9' of Fig. 4, in the described method, the steps of receiving updated GNSS measurements and PPP global space segment corrections as well as computing new high accuracy position and update local atmospheric errors using PPP-AR are performed in a loop or similar, repetitive structure.

In other words, once the satellite navigation device 230 has been initialized once in step S8, the satellite navigation device 230 can operate autonomously by continuously updating local atmospheric errors and, optionally, receiving space segment errors from a broadcast channel. This is particular advantageous if the satellite navigation device 230 moves to an area not covered by the communication network 290, for example to a remote location or another area with no or only limited data transmission bandwidth.

However, in case an errors occurs or the satellite navigation device 230 is re-initialised, in case the satellite navigation device 230 is still connected to the communication network 290, the method may also return to step S6 and sent another request for local assistance data. Moreover, in other PPP algorithm without ambiguity resolution, the above solution may still be employed to improve start-up behaviour of a satellite navigation receiver. Even if local atmospheric correction data cannot be successfully obtained, both PPP-AR and other PPP position methods will still work, although they typically will have a degraded performance. For example, in absence of local assistance data, the satellite navigation device 230 may require a longer time to obtain a precise position or achieve a reduced precision.

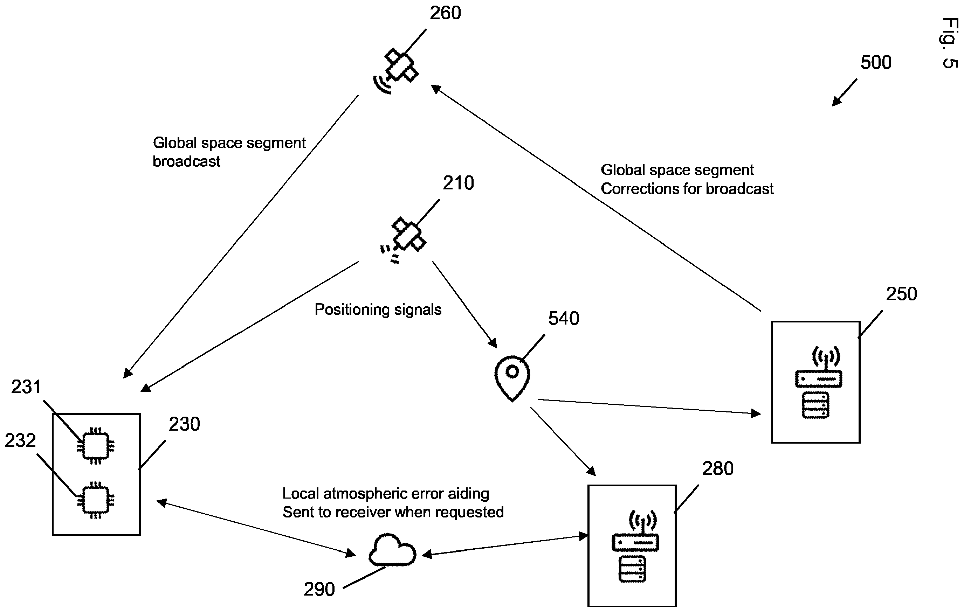

Figures 5 to 9 show schematically further possible architectures for satellite-based positioning systems. With exception of the differences explained below, their components correspond to the respective components of the satellite-based positioning systems 200 explained above.

Specifically, in the satellite-based positioning systems 500 according to Figure 5, a single reference receiver 540 or network of reference receivers 540 performs the function of both the first and second reference receivers 240 and 270, and delivers corresponding first and second error data to the first server 250 and the second server 280.

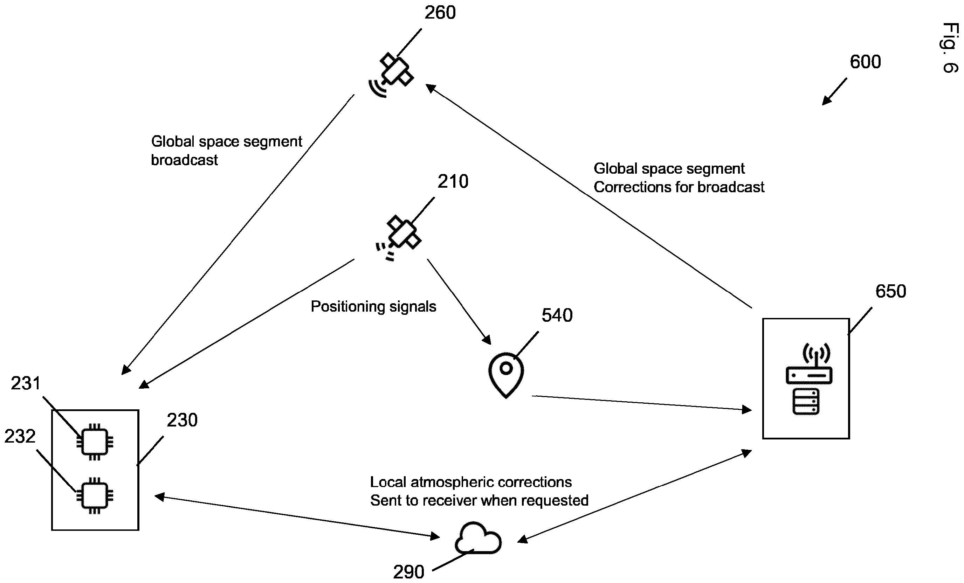

In addition, in the satellite-based positioning systems 600 according to Figure 6, a correction server 650 performs the function of both the first and second servers 250 and 280.

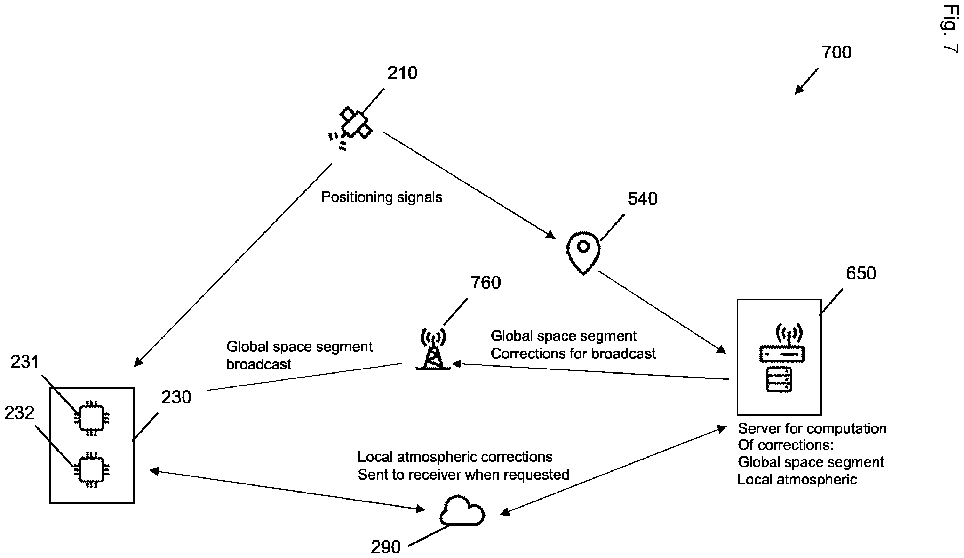

In addition, in the satellite-based positioning systems 700 according to Figure 7, instead of a global PPP correction broadcast satellite 260, a terrestrial broadcast network 760 is used for broadcasting space segment correction data.

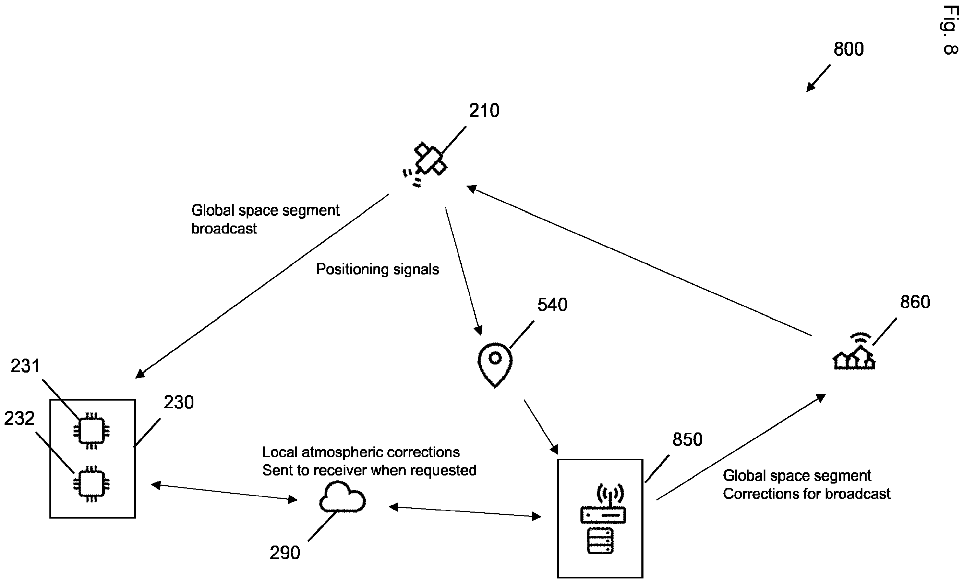

In the satellite-based positioning systems 800 according to Figure 8, a single correction server 850, performing the function of both the first and second servers 250 and 280, makes use of existing SNS ground control infrastructure 860 to broadcast space segment correction data using one or more of the navigation satellites 210. For example, an auxiliary channel, such as a data bearer on bands L6 or E6 may be used for broadcasting the space segment correction data.

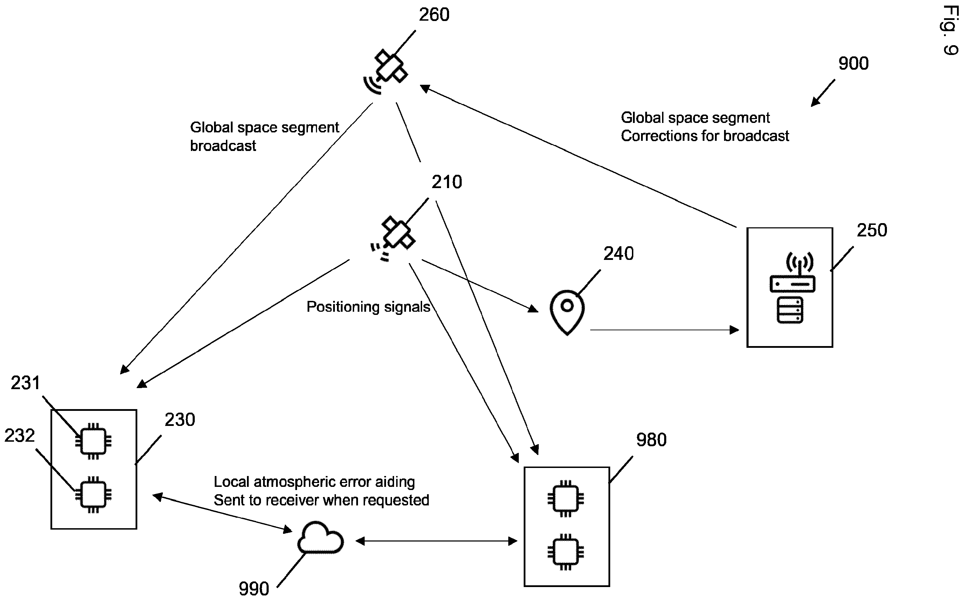

Lastly, in the satellite-based positioning systems 900 according to Figure 9, a second satellite navigation device 980 may take over the role of the second server 280. That is to say, two ordinary satellite navigation device 230 and 980 may collaborate, in a peer-to-peer (P2P) manner, to speed up initialization of a PPP algorithm, without the need for a central service provider providing local assistance data.

As an example, the second satellite navigation device 980 may already have computed local atmospheric errors with or without local assistance data. Then, upon activation, the (first) satellite navigation device 230 detects the presence of the second satellite navigation device 980 in its vicinity, e.g. using Bluetooth or 3GPP device-to-device (D2D) discovery and/or communication protocols. It may then request data related to the local atmospheric errors computed by the second satellite navigation device 980 using a communication network 990, such as a local area network (LAN) or personal area network (PAN), and use the received data as local assistance data to initialize its own PPP algorithm. This is particular useful for areas not served by a local assistance data provider and/or outside the area of reception of a land based communication network 290, e.g. a 3GPP network.

While the various differences in the architectures according to the system of Figures 2 and 5 to 9 have been described separately, the skilled person will understand that these can be combined in various ways to obtain the various technical effects associated therewith.

The disclosed systems, architectures, methods and algorithms have a number of advantages compared to existing solutions. For example by separating the space segment correction data from local assistance data, the bandwidths required for providing the assistance data can be greatly reduced. In particular, in comparison with systems broadcasting combined space segment and atmospheric correction data, the data volume of the transmitted data can be reduced, the precision of the provided correction data can be improved, or an update interval can be reduced.

Moreover, in comparison to systems transmitting only space segment correction data, the start-up time of the satellite navigation device 230 can be greatly reduced. This is important for many applications, including autonomous driving, wherein precise knowledge about the initial position of a vehicle is required.

Moreover, in combination with a PPP-AR algorithm, once a precise position or time is obtained following the initialization in step S8, the precision can be maintained or even improved without further updates from an external service provider. For example, if a vehicle leaves the coverage of the communication network 290, it can continue to track and store local atmospheric errors, thereby producing highly accurate positions or times based on continuously received positioning signals.

Because local assistance data is only retrieved on an asneeded basis a conventional data service using user plane data bearers and conventional data protocols is efficient in terms of total data capacity requirements. It also means that a high accuracy service can be offered globally without the current geographic restrictions that affect conventional State Space Representation based services. The ability to retrieve geographic corrections on demand avoids the need for the satellite receiver to wait for completion of a (potentially long) broadcast update cycle, leading to more rapid convergence and to a high accuracy positioning solution.

List of reference symbols

| | |
|---|---|
| 100 | satellite-based navigation system (SNS) |
| 110 | navigation satellites |
| 120 | area |
| 130 | satellite navigation device |
| 140 | reference receiver station |
| 150 | processing centre |
| 200 | satellite-based navigation system (SNS) |
| 210 | navigation satellites |
| 220 | area |
| 230 | satellite navigation device |
| 231 | multi-frequency receiver |
| 232 | communication device |
| 233 | separate receiver |
| 240 | first reference receiver |
| 250 | first server |
| 260 | global PPP correction broadcast satellite |
| 270 | second reference receiver |
| 280 | second server |
| 290 | communication network |
| | |
| 500 | satellite-based navigation system (SNS) |
| 540 | reference receiver |
| | |
| 600 | satellite-based navigation system (SNS) |
| 650 | correction server |
| | |
| 700 | satellite-based navigation system (SNS) |
| 760 | terrestrial broadcast network |
| | |
| 800 | satellite-based navigation system (SNS) |
| 850 | correction server |
| 860 | SNS ground control infrastructure |
| | |
| 900 | satellite-based navigation system (SNS) |
| 980 | second satellite navigation device |
| 990 | communication network |

S1 - S11    method steps


**Claims**

1.  A precise point positioning, PPP, method performed by a satellite navigation device (230), comprising:

    - receiving multiple positioning signals from a plurality of navigation satellites (210) of a satellite-based navigation system (200) using a multi-frequency receiver (231) ;
    - receiving space segment correction data for the navigation satellites (210) of the satellite-based navigation system (200);
    - separately requesting and receiving local assistance data, wherein the local assistance data represents atmospheric errors in the vicinity of the satellite navigation device (230); and
    - computing at least one of a precise position or time based on the received positioning signals, the space segment correction data and the local assistance data.

2.  The method of claim 1, wherein the computing comprises:

    - computing carrier phase corrections for each one of the received positioning signals to determine phase relationships between the received positioning signals using a PPP with ambiguity resolution, PPP-AR, algorithm based on the space segment correction data and the local assistance data, wherein ambiguities in the determined phase relationships are resolved using the received local assistance data.

3.  The method of claim 1 or 2, further comprising the following steps performed repeatedly during the operation of the satellite navigation device (230):

    - receiving current space segment correction data;
    - receiving current positioning signals from a plurality of the navigation satellites (210) using the multi-frequency receiver (231);
    - estimating updated atmospheric errors for each one of the received positioning signals based on the current space segment correction data and previously determined atmospheric errors in absence of current local assistance data; and
    - determining a precise position or time of the satellite navigation device (230) based on the current position signals, the current space segment correction data and the estimated, updated atmospheric errors.

4.  The method of any one of claims 1 to 3, wherein the local assistance data is received only once, in particular during an initialization or re-synchronization step of the satellite navigation device (230).

5.  The method of any one of claims 1 to 4, wherein the local assistance data is received in response to a corresponding request comprising position data related to an approximate position of the satellite navigation device (230) and/or satellite data related to at last one navigation satellite (210) from which at least one of the positioning signals is received.

6.  The method of claim 5, wherein:

    - before the request is sent, the satellite navigation device (230) determines an approximate position of the satellite navigation device (230); and
    - the request comprises position data related to the determined approximate position.

7.  The method of any one of claims 1 to 6, wherein

    - the space segment correction data is received over a broadcast channel, in particular via at least one of the navigation satellites (210), a geostationary communication satellite, a low earth orbit communication satellite, or a terrestrial transmitter; and the local assistance data is requested and received via a bidirectional communication network (290); and/or
    - the space segment correction data is received over a first transmission channel providing a data stream with an essentially fixed first bandwidth; and the local assistance data is received over a second transmission channel providing individual data messages with a variable second bandwidth.

8. The method of any one of claims 1 to 7, wherein

   - the space segment correction data comprises satellite clock correction data, satellite orbit correction data, and/or satellite bias correction data for at least one constellation of navigation satellites (210); and/or
   - the local assistance data comprises ionospheric error data and/or tropospheric error data for at least one position within the vicinity of the satellite navigation device (230).

9. A satellite navigation device (230), comprising:

   - a multi-frequency receiver (231) configured to receive multiple positioning signals from a plurality of navigation satellites (210) of a satellite-based navigation system (200);
   - a first interface configured to obtain space segment correction data for the navigation satellites of a satellite-based navigation system (200) of the satellite-based navigation system (200);
   - a second interface configured to request and obtain local assistance data wherein the local assistance data represents atmospheric errors in the vicinity of the satellite navigation device (230); and
   - a processing unit configured to execute a precise point positioning, PPP, algorithm to compute at least one of a precise position or time, wherein
   - the PPP algorithm resolves carrier phase ambiguities between signals received by the multi-frequency receiver (231) using the received positioning signals, the obtained space segment correction data and an estimate of atmospheric errors; and
   - the local assistance data is used to speed up an initial determination of the atmospheric errors affecting the navigation signals received by the multi-frequency receiver (231).

10. The device of claim 9, further comprising:

   - a transceiver configured to perform bidirectional communication with a communication network (290); wherein
   - the first interface is configured to receive a data stream comprising the space segment correction data from a broadcast channel, in particular a satellite broadcast channel received using the multi-frequency receiver (231); and
   - the second interface is configured to send a request to and receive a corresponding response from a service provider via the communication network (290) using the transceiver.

11. A method for providing assistance data to at least one satellite navigation device (230), the method being performed by at least one service provider, comprising:

   - determining space segment correction data for navigation satellites (210) of a satellite-based positioning system (200), the space segment correction data comprising satellite clock correction data, satellite orbit correction data, and/or satellite bias correction data for at least one constellation of navigation satellites (210) ;
   - broadcasting the space segment correction data to a plurality of satellite navigation devices (230);
   - wait for requests for assistance data, each received request being related to an approximate position of a corresponding satellite navigation device (230);
   - determining first local assistance data, the first local assistance data comprising ionospheric and/or tropospheric correction data for a first area (220); and
   - transmitting the first local assistance data to a first satellite navigation device (230) in response to a first request received from the first satellite navigation device (230), the first request being related to an approximate position within the first area (220).

12. The method of claim 11, wherein:

   - the space segment correction data is broadcast by the at least one service provider repeatedly to the plurality of satellite navigation devices (230) via at least one of the navigation satellites (210), a geostationary communication satellite, a low earth orbit communication satellite, or a terrestrial transmitter; and/or
   - the local assistance data is transmitted by the at least one service provider in response to the first request via a bidirectional communication network (290).

13. An assistance server (280), comprising:

   - a communication interface, configured to wait for requests for assistance data from at least one satellite navigation device (230), each request being related to an approximate position of the at least one satellite navigation device (230); and

- a processing unit configured to determine local assistance data for resolving ambiguities in determined carrier phase relationships by a precise point positioning, PPP, algorithm of at least satellite navigation device (230) located within a first area (220), the local assistance data comprising ionospheric and/or tropospheric correction data for a first area (220) ;

- wherein the communication interface is further configured to transmit the local assistance data in response to a first request received from a first satellite navigation device (230), the first request being related to an approximate position within the first area (220).

14. A satellite-based positioning system (200), comprising:

- at least one satellite navigation device (230) according to claim 9;
- an assistance server (280) according to claim 13; and
- a space segment correction provider, wherein
- the space segment correction provider is configured to broadcast the space segment correction data to the at least one satellite navigation device (230) via a broadcast channel, in particular via at least one of the navigation satellites (210), a geostationary communication satellite, a low earth orbit communication satellite, or a terrestrial transmitter; and
- the assistance server (280) is configured to transmit the local assistance data to the at least one satellite navigation device (230) via a bidirectional communication network (290) in response to receiving a corresponding request from the at least one satellite navigation device (230).

15. A computer program comprising instructions which, when the program is executed by at least one processor of a satellite navigation device (230) or at least one server of at least one service provider, cause the satellite navigation device (230) to carry out the method of any one of claims 1 to 8 or the at least one server to carry out the method of any one of claims 11 to 12, respectively.

Fig. 1

Fig. 2

260

200

Global space segment
broadcast

Global space segment
Corrections for broadcast

210

220

250

240

Positioning signals

231

232

230

270

280

Local atmospheric error aiding
Sent to receiver when requested

290

EP 4 273 584 A1

Fig. 3

Output High Accuracy PVT

Execute PPP-AR Algorithm for High Accuracy

Track and store local atmospheric errors

Receive and measure Code and carrier phase

Track and store space segment errors

On initialisation request Atmospheric errors And initialise local copy

231 — GNSS receiver for Positioning signals

233 — Receiver for global Space segment corrections

232 — Communications interface

Fig. 4

EP 4 273 584 A1

S1: On start-up of GNSS receiver

↓

S2: Acquire GNSS signal measurements for positioning

↓

S3: Optionally request conventional aiding data – almanac, ephemeris, precise time

↓

S4: Compute standard position using conventional code-based positioning

↓

S5: Receive PPP global space segment corrections from broadcast service

↓

S6: Send request for PPP atmospheric aiding data to server – for local receiver position

↓

S7: Receive atmospheric aiding data from server

↓

S8: Initialise PPP algorithm using global space segment corrections and atmospheric aiding data

↓

S9

  S10: Compute High Accuracy position using initialised PPP-AR algorithm

  S11: compute and store atmospheric errors

↓

S2': Receive updated GNSS measurements

↓

S5': Receive updated PPP global space segment corrections

↓

S9': Compute new High Accuracy position and update local atmospheric errors using PPP-AR

On error or re-initialisation

Fig. 5

Fig. 6

260

600

Global space segment
broadcast

Global space segment
Corrections for broadcast

210

650

Positioning signals

540

231

232    230

Local atmospheric corrections
Sent to receiver when requested

290

Fig. 7

Fig. 8

800

210

Global space segment
broadcast

Positioning signals

540

231

232

230

860

Local atmospheric corrections
Sent to receiver when requested

850

Global space segment
Corrections for broadcast

290

Fig. 9

Europäisches
Patentamt
European
Patent Office
Office européen
des brevets

# EUROPEAN SEARCH REPORT

Application Number

**EP 22 17 1620**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 238 268 A (HI TARGET SURVEYING INSTR CO LTD) 10 August 2021 (2021-08-10) * the whole document * | 1-15 | INV. G01S19/06 G01S19/07 G01S19/43 |
| X | Collins Paul: "External Ionospheric Constraints for Improved PPP-AR Initialisation and a Generalised Local Augmentation Concept", , 21 September 2012 (2012-09-21), XP055969263, Retrieved from the Internet: URL:https://www.ion.org/publications/abstract.cfm?articleID=10485 [retrieved on 2022-10-10] * the whole document * | 1-15 | |

TECHNICAL FIELDS
SEARCHED     (IPC)

G01S

The present search report has been drawn up for all claims

| Place of search | Date of completion of the search | Examiner |
|---|---|---|
| Munich | 10 October 2022 | Galmiche, Aurélien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 1620

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2022

| Patent document cited in search report | Publication date | Patent family member(s) | Publication date |
|---|---|---|---|
| CN 113238268 A | 10-08-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TEUNISSEN, P.J.G.** The least-squares ambiguity decorrelation adjustment: a method for fast GPS integer ambiguity estimation. *Journal of Geodesy,* 1995, vol. 70, 65-82